# EUROPEAN PATENT SPECIFICATION

(11) **EP 1 711 280 B1**
(45) Date of publication and mention of the grant of the patent: **21.10.2009**
(21) Application number: 05702150.3
(22) Date of filing: 07.01.2005
(51) Int. Cl.: B07B 1/48

(54) **APPARATUS FOR SEPARATING SOLIDS FROM A SOLIDS LADEN DRILLING FLUID AND METHOD FOR FITTING A SCREEN ASSEMBLY IN A VIBRATORY SEPARATOR**
VORRICHTUNG ZUM TRENNEN VON FESTSTOFFEN VON EINER FESTSTOFF ENTHALTENDEN BOHRFLÜSSIGKEIT UND VERFAHREN ZUM ANBRINGEN EINER SIEBANORDNUNG IN EINER VIBRATIONSTRENNVORRICHTUNG
APPAREIL PERMETTANT DE SEPARER DES SOLIDES D'UN FLUIDE DE FORAGE CHARGE EN SOLIDES ET PROCEDE PERMETTANT D'AJUSTER UN ENSEMBLE CRIBLE DANS UN SEPARATEUR VIBRATOIRE

(30) Priority: 06.02.2004 US 774303
(43) Date of publication of application: 18.10.2006
(73) Proprietor: Varco I/P, Inc., Houston TX 77042-4200 (US)
(72) Inventor: STRONG, Gary, Steven, Huntsville, TX 77340 (US); ADAMS, Thomas, Cole, Hockley, TX 77447 (US); SMITH, Haynes, Bell, Kingwood, TX 77345 (US); ADAMS, James, Newton, Conroe, TX 77303 (US); GRICHAR, Charles, Newton, Houston, TX 77009 (US); WARD, Kerry, Thomas, Cypress, TX 77429 (US); BURNETT, George Alexander, Aberdeen, Aberdeenshire AB10 7JR (GB); SEYFFERT, Kenneth, Wayne, Houston, TX 77018 (US); MCCLUNG III, Guy, Lamont, Spring, TX 77379 (US)
(74) Representative: Lucas, Phillip Brian
(86) International application number: PCT/GB2005/050005
(87) International publication number: WO 2005/075114

(56) References cited:
- WO-A-97/47404
- GB-A- 338 651
- US-A- 1 397 342
- US-B1- 6 283 303

## Description

The present invention relates to an apparatus for separating solids from a solids laden drilling fluid and a method for fitting a screen assembly in a vibratory separator.

In the drilling of a borehole in the construction of an oil or gas well, a drill bit is arranged on the end of a drill string and is rotated to bore the borehole. A drilling fluid known as "drilling mud" is pumped through the drill string to the drill bit to lubricate the drill bit. The drilling mud is also used to carry the cuttings produced by the drill bit and other solids to the surface through an annulus formed between the drill string and the borehole. The drilling mud contains expensive synthetic oil-based lubricants and it is normal therefore to recover and re-use the used drilling mud, but this requires the solids to be removed from the drilling mud. This is achieved by processing the drilling fluid. The first part of the process is to separate the solids from the solids laden drilling mud. This is at least partly achieved with a vibratory separator, such as those shale shakers disclosed in US 5,265,730, WO 96/33792 and WO 98/16328.

Shale shakers generally comprise an open bottomed basket having one open discharge end and a solid walled feed end. A number of rectangular screen assemblies are arranged in the basket, which are held in C-channel rails located on the basket walls, such as those disclosed in GB-A-2,176,424. The basket is arranged on springs above a receptor for receiving recovered drilling mud. A skip or ditch is provided beneath the open discharge end of the basket. A motor is fixed to the basket, which has a drive rotor provided with an offset clump weight. In use, the motor rotates the rotor and the offset clump weight, which causes the basket and the screen assemblies fixed thereto to shake. Solids laden mud is introduced at the feed end of the basket on to the screen assemblies. The shaking motion induces the solids to move along the screen assemblies towards the open discharge end. Drilling mud passes through the screen assemblies. The recovered drilling mud is received in the receptor for further processing and the solids pass over the discharge end of the basket into the ditch or skip

The screen assemblies are generally of one of two types: hook-strip; and pre-tensioned.

The hook-strip type of screen assembly comprises several rectangular layers of mesh in a sandwich, usually comprising one or two layers of fine grade mesh and a supporting mesh having larger mesh holes and heavier gauge wire. The layers of mesh are joined at each side edge by a strip which is in the form of an elongate hook. In use, the elongate hook is hooked on to a tensioning device known as a drawbar arranged along each side of a shale shaker. The shale shaker further comprises a crowned set of supporting members, which run along the length of the basket of the shaker, over which the layers of mesh are tensioned. An example of this type of screen is disclosed in GB-A-1,526,663. A variant of this type of screen assembly comprises a supporting mesh and/or a thin sheet panel having apertures therein.

The pre-tensioned type of screen assembly comprises several rectangular layers of mesh, usually comprising one or two layers of fine grade mesh and a supporting mesh having larger mesh holes and heavier gauge wire. The layers of mesh are pre-tensioned on a rigid support comprising a rectangular angle iron frame and adhered thereto. The screen assembly is then inserted into C-channel rails arranged in a basket of a shale shaker. An example of this type of screen is disclosed in GB-A-1,578,948.

A further example of a known rigid support is a rectangular box section steel.

A further example of a known rigid support is disclosed in PCT Publication No. WO 01/76719, which discloses, amongst other things, a flat panel like portion having apertures therein and wing portions which are folded to form a support structure, which may be made from a single sheet of material. This rigid support has been assigned the Trade Mark "UNIBODY" by the applicants.

WO 2004/035234 and WO 2004/035236 disclose a third type of screen assembly, which comprises one or more layers of mesh on a semi-rigid support. The semi rigid support is not sufficiently rigid on its own for use in a standard vibratory separator, such as a VSM 100™ or VSM 300™ or Cobra™ shale shakers sold by the Brandt, a Varco Company, but requires additional support using one or two intermediate supports over which the semi-rigid support can be deflected to provide additional support, which do not impinge on screening area or affect the flow of material over the screening surface of the screen assembly. The intermediate support can be arranged in a removable rigid tray or fixed to the shale shaker. The semi-rigid support is lighter than a rigid support for a standard pre-tensioned screen assembly, such as those disclosed in WO 01/76719 and thus can be handled more easily and transportation costs reduced.

GB-A-2,176,425 discloses a vibratory separator having a basket and channels arranged on internal faces of the basket for receiving a screen assembly. The screen assembly comprises screening mesh laid over and fixed to a frame. The channels have an inflatable stocking therein for clamping the frame of the screen assembly in the channels. The screen assembly also has a stiffening screen support along each of two intermediate parts of the screen assembly and the vibratory separator has a tributary of the stocking along each of two intermediate parts of the vibratory separator, such that in use, the tributaries are inflated to engage the stiffening ribs.

US-A-4,457,839 discloses a vibratory screening apparatus having hydraulic actuators to fix a rigid screen assembly therein, the hydraulic actuators acting upwardly, pushing the screen assembly against an upper leaf.

WO 03/061854 discloses a screening apparatus for separating solids from a solids laden drilling mud, the screening apparatus comprising a shale shaker and a screen assembly mounted therein, the shale shaker having a mounting structure, the screen assembly comprising at least one layer of screening material tensioned to a screen support, **characterised in that** at least one hole is located in at least one of said screen support and said mounting structure, the screening apparatus further comprising a pin receivable in said at least one hole.

The layers of mesh in the screen assemblies wears out frequently and therefore needs to be easily replaceable. Shale shakers are generally in the order of 1.5m (5ft) wide and 3m (10ft long). A screen of dimensions 1.2m (4ft) wide by 3m (10ft) long is difficult to handle, replace and transport. It is known to use two, three, four or more screens in a single shale shaker. A standard size of screen currently used is of the order of 1.2m (4ft) by 0.9m (3ft).

The prior art discloses a variety of mounting systems and apparatuses for releasably mounting a screen assembly to a shale shaker. These include drawbar and hookstrip apparatuses; inflatable device systems; wedge systems; e.g. the systems described in U.S. Patents 6,179,128 issued Jan 30, 2001; 5,392,925 issued Feb. 28, 1995; 4,882,054 issued Nov. 21, 1989; 4,582,597 issued Apr. 15, 1986; and in the prior art referred to in each of these references.

The prior art discloses a variety of screen assemblies and of screen assembly mounting systems for holding screen assemblies in vibratory separators, for releasably clamping such screen assemblies in position, for maintaining such screen assemblies in position during operation of the separators, and, in certain apparatuses, for providing desired tension on screening material that is part of a screen assembly. Since the screening material of these screen assemblies wears, tears, and degrades during use, it is desirable that the screen assembly mounting systems provide for easy installation, removal, and replacement of screen assemblies.

U.S. Patents 3,968,033; 4,846,352; 5,226,546; 4,224,146; 4,744,898; 6,179,128; 4,040,951; 4,303,509; 5,332,101; 6,401,935; 3,718,963; and 2,630,225 and the references cited therein provide a variety of separators, shakers, and mounting systems for screen assemblies therein.

WO 97/47404, ITS Holding Limited, discloses a filter screen for filtering particles from drilling fluid recovered from oil wells. The filter screen comprises a layer of screening mesh supported by a wedge wire frame. The screening mesh has sleeves located at either side, each sleeve having a hose therein and a dowel located at a peripheral edge. The dowel is inserted into wells (18a) and a clip inserted therein. The hose is inflated in the sleeve in a groove to fix and tension the screening mesh, whereupon the resulting conformational change in the hose draws the screen into the groove.

US-A-1,397,342 Sturtevant, discloses a screen separator having a coarse screen cloth having margins connected by rivets to rectangular bars arranged obliquely to side plate flanges. Bolts are used to tighten a reverse bent side plate against heads of the rivets.

GB-A-338,651 discloses a screen cloth inserted over an angled member and a wedge inserted between a clamping member and an angle iron to fix and tension the screen cloth.

There has long been a need, recognized by the present inventors, for a fast and efficient way to replace screen assemblies in a vibratory separator or shale shaker. There has long been a need, recognized by the present inventors, for a way to change out a screen assembly without shutting down a wellbore operation which employs the separator or shaker. There is a need, recognized by the present inventors, for an efficient and effective screen mounting structure and method for screen assemblies for shale shakers. There is a need, recognized by the present inventor, for an efficient and stable mounting of screens to a shale shaker.

In accordance with the present invention, there is provided an apparatus for screening solids from a solids laden drilling mud, the apparatus comprising a vibratory separator and a screen assembly having at least one layer of screening material, the vibratory separator having a basket, mounting apparatus for fixing the screen assembly in the vibratory separator **characterised in that** the mounting apparatus comprises an anvil and a hammer wherein at least one of the anvil and hammer comprises at least one pin, the screen assembly having at least one hole therein for receiving the at least one pin and the screen assembly arranged between the anvil and the hammer for bending a portion of the screen assembly, the portion comprising the at least one layer of screening material. Preferably, when activating the mounting apparatus, the anvil and hammer deform the screen assembly in the fixing of the screen assembly in the vibratory separator, preferably to form a fold. Advantageously, the fold is formed immediately adjacent the mounting apparatus in a region of the screen which does not perform screening. Advantageously, the screen material in the screen assembly is tensioned by the movement of the screen assembly in the deformation of the portion of the screen assembly. Preferably, the edge of the screen assembly assumes an inclination corresponding to the inclined upper surface of the corresponding anvil, which is preferably formed in a side ledge fixed to the basket of the vibratory separator.

Such a screen assembly may include a typical support structure, including, but not limited to, a strip support, a perforated plate, and/or a frame, e.g., in one aspect a frame made of tubular members with or without crossmembers; while in another aspect such a screen assembly has no such support structure.

Preferably, the bend formed in the portion of the screen assembly is plastic deformation, such that the bend is permanent in that it does not spring back or only a little. Alternatively, only elastic deformation may occur, in which case the bent portion of the screen assembly assumes its original position. Preferably, the portion is located at an edge of the screen assembly. Advantageously, the screen assembly is generally rectangular and the portion of the screen assembly is a side of the rectangle. The majority of vibratory separators and thus screen assemblies are rectangular to fit rectangular footprints.

Preferably, the portion of the screen assembly comprises at least one layer of screening material either on its own or with a flange of a support or perforate plate. Advantageously, the portion of the screen assembly comprises a portion of a perforate plate. Preferably, the portion of the screen assembly comprises a portion of a support, such as a frame, flange or leaf.

Preferably, the anvil comprises a sloped surface on a ledge attached to the basket. Preferably, the sloped surface is inclined toward an interior of the basket and the holding apparatus includes two spaced-apart side members, each side member pushing down on an edge of the screen assembly thereby tensioning the screening material.

Advantageously, the hammer comprises a rail extending substantially the entire length of the screen assembly. Preferably, the rails seal against a top surface of the screening material and advantageously, the rails hold the screen assembly in sealing contact with the deck. Advantageously, downward force of the rails tensions the screening material of the screen assembly. Preferably, the hammer comprises at least one actuator. Advantageously, the at least one actuator is activated by one of: pneumatic fluid; hydraulic fluid; an electric motor. Such power may be provided by dedicated portable power sources and/or by existing power sources, e.g. existing power sources on a drilling rig or at a job site. Preferably, pressurized air and/or nitrogen is used as a pneumatic fluid. Alternatively, the hammer is manually operable to selectively moving the rails. Preferably, the actuator is a dual acting piston. Advantageously, the actuator is an inflatable bladder. The inflatable bladder contacts a top surface of the screening material providing a seal between an interface of a lower surface of the inflatable bladder and the top surface of the screening material. Advantageously, the at least one actuator is mounted on a bar mounted to the basket. In one aspect the inflatable bladder is used to push down on a screen assembly to clamp the screen assembly in an operative position in a vibratory separator or shale shaker. In one aspect the bladder(s) are strong and powerful enough to bend a screen for tensioning of screening material. In one aspect the bladder(s) directly contact screening material of a screen assembly and rails as described above are used, while in another aspect such rails are not used.

In one aspect there is a deck or a series of spaced-apart ribs or supports under the screen assembly. Such ribs or supports can be curved with a desired curve producing a desired crowned shape and the screens are bent onto them to correspond to this curve.

Each anvil, which may be formed in a ledge or support preferably has an inclined surface and the hammer such as rails are forced against the screen assembly by the downward force of the pistons/bladder - have an angled bottom surface that presses against the edges of the screen assembly forcing the edges against surfaces of the ledges to bend the screen assembly's edges thereby producing a "crowned" configuration that stretches and imparts tension to screening material on the screen assembly. Movable-member-top-of-screen contact can also effect a seal with the top of the screen assembly and between the screen assembly and the underlying support. Thus apparatus and methods in accordance with the present invention may also be used with screen assemblies that are more rigid and have frames or other supports that do not bend.

Preferably, the at least one pin is a plurality of pins. Preferably, the other of said anvil and hammer comprises at least one hole or recess for receiving said at least one pin. Advantageously, the at least one hole or recess is a plurality of holes or recesses. Preferably, the holes correspond with the pins, fitting with a lose fit or with a friction fit.

The present invention also provides a method for fitting a screen assembly in a vibratory separator of the apparatus as of the invention, the method comprising the steps of placing said screen assembly and a portion of at least one layer of screening material of said screen assembly in said mounting apparatus between said anvil and said hammer, at least one pin passing through said at least one hole or recess in said screen assembly, said hammer moving toward said anvil bending said portion of said screen assembly and said at least one layer of screening material.

The present invention also provides a method for separating solids from a solids laden drilling mud using the apparatus of the invention, wherein the vibratory separator is operated to vibrate the screen assembly in the basket on to which solids laden drilling fluid flows, the fluid component and small solid particles flowing through the screen assembly and large solids passing over said screen assembly.

The pins help to provide for correct emplacement and positioning of the screen assembly on the vibratory separator tray, bed, or deck and also stabilize the screen assembly or assemblies during operation of the shale shaker. The downwardly projecting member(s) may be formed integrally of a screen support (frame, strip support, perforated plate, unibody structure) and/or they may be releasably attached to or connected to the support.

For a better understanding of the present invention, reference will now be made by way of example, to the accompanying drawings, in which:
Figure 1A is a schematic perspective view of a vibratory separator of in accordance with the present invention;
Figure 1B is a perspective view of a screen assembly in accordance with the present invention for use on a vibratory separator as in Figure 1A;
Figure 1C is a schematic perspective view of the screen assembly shown in Figure 1B mounted in the vibratory separator shown in Figure 1A;
Figure 1D is a side view of a part of the vibratory separator shown in Figure 1A, showing a bar on which pistons are arranged;
Figure 1E is a top view of a part of the vibratory separator shown in Figure 1A, showing a rail;
Figure 1F is an end view of the bar shown in Figure 1D;
Figure 1G is a cross-sectional view of the rail shown in Figure 1E;
Figures 1H and I are cross-sectional views showing connection of a piston of the vibratory separator shown in Figure 1D to the rail shown in Figure 1E;
Figure 2A is a front view of a clamping apparatus in a basket of a shale shaker in accordance with the present invention;
Figure 2B is a view of part of the shale shaker shown in Figure 2A;
Figure 2C is an enlarged view of part of the shaker of Figure 2A;
Figure 3 is a front view of a vibratory separator in accordance with the present invention;
Figure 4A is a front view of a basket of a vibratory separator in accordance with the present invention, the basket comprising clamping apparatus having inflated inflatable bladders fixing a screen assembly in accordance with the present invention therein, dashed lines indicate the original form of the screen assembly prior to inflation of the inflatable bladders;
Figure 4B shows the vibratory separator in Figure 4A showing the inflatable bladders deflated after having been inflated and the screen assembly in a deformed state, dashed lines indicate the original form of the screen assembly prior to inflation of the inflatable bladders;
Figure 4C shows an enlarged view of part of the basket shown in Figures 4A and 4B, with a screen assembly therein, with the bladder deflated and in dashed lines inflated and the screen assembly deformed and in dashed lines in a state before the screen assembly was fixed in the basket;
Figure 5 is a side view of a shale shaker in accordance with the present invention, with hidden parts in broken dashed lines and schematic paths in dashed lines; and
Figure 6 is a side view of part of a clamping apparatus for an apparatus in accordance with the present invention.

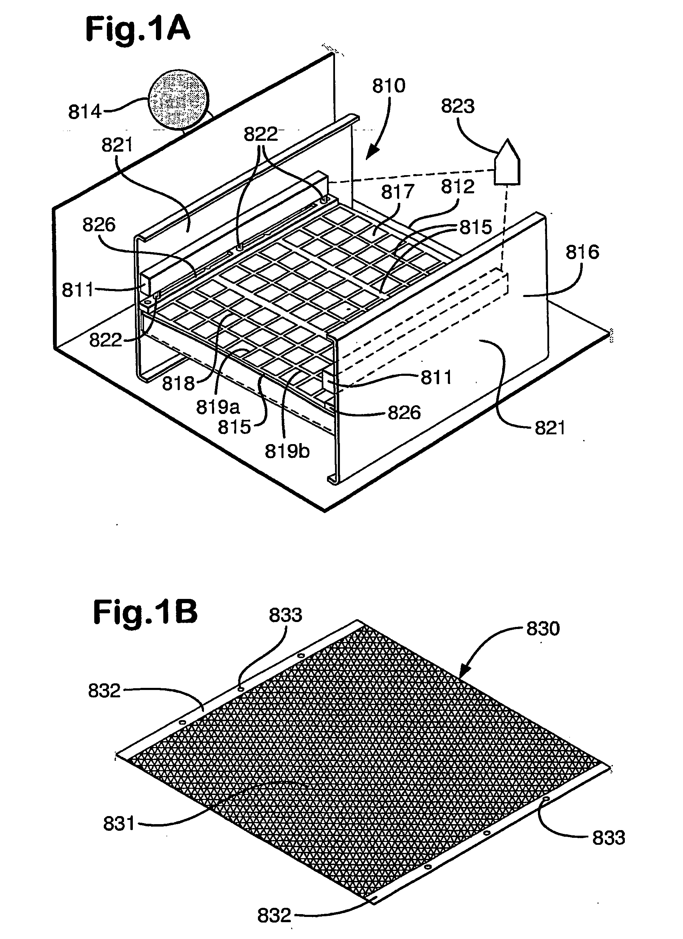

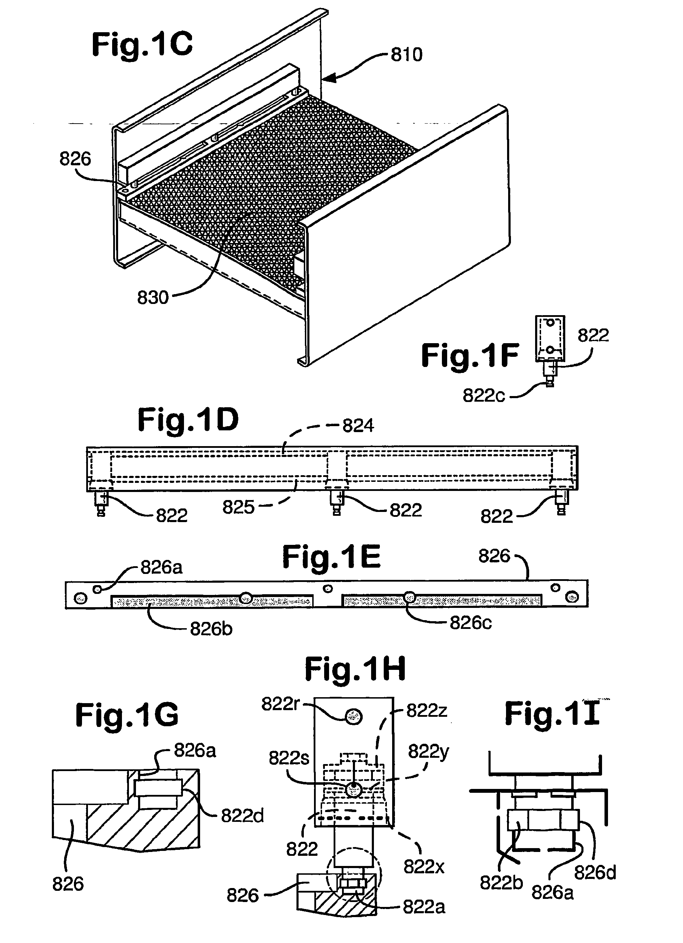

Figures 1A to 1I shows schematically parts of a vibratory separator 810 in accordance with the present invention, which has a support 812 and vibration apparatus 814. The support 812 supports a basket 816 which has a deck 818 for supporting a screen assembly, such as the screen assembly 830 shown in Figure 1B. The deck 818 has a series of holes 817 between crossmembers 815 and crossmembers 819a, 819b. The crossmembers 815 and 819b have upper curved surfaces to which a screen assembly installed thereon conforms.

Two bars 811 are secured to side walls 821 of the basket 816. Each bar 811 has three pistons 822 movably mounted therein. Fluid under pressure, in one aspect hydraulic fluid is supplied from a hydraulic fluid source 823. Dotted lines in Figure 1D indicate fluid communication with channels in the bars 811, which flows selectively into channels 824, 825 to move dual acting pistons 822 up and down.

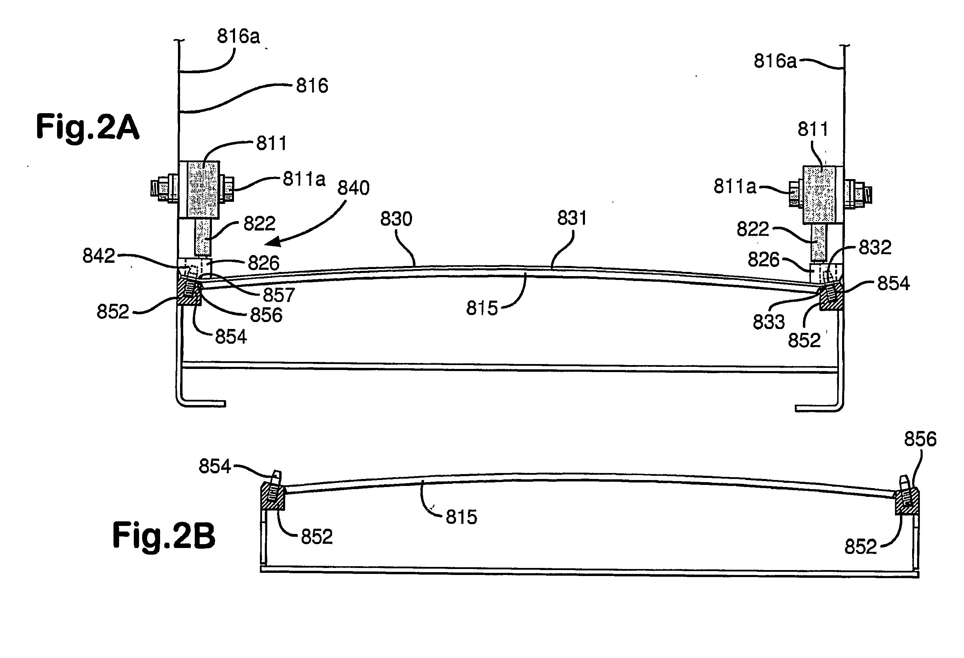

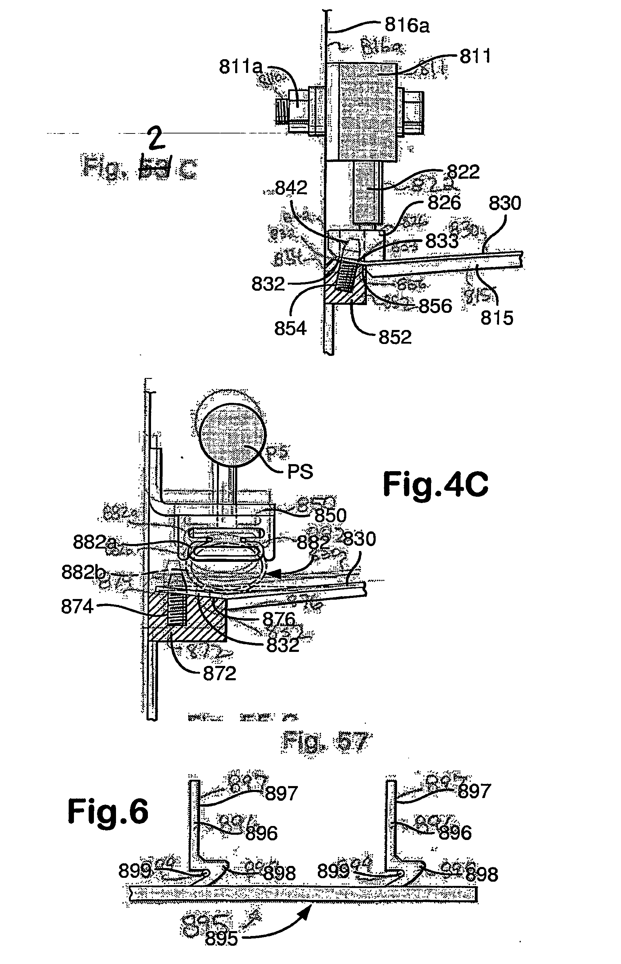

The pistons 822 are releasably connected to movable rails 826 that move up and down as the pistons 822 move up and down. Figure 1E shows a top view of a rail 826 with holes 826a for receiving the pistons 822, with optional recesses 826b, and holes 826c for receiving pins 854, 865 described below with reference to Figures 2A to 2C.

Figures 1H and 1I show one method for releasably connecting a piston end 822a to a rail 826. A snap-ring (e.g. a plastic o-ring) 822b is positioned in a recess 826d of a hole 826a of the rail 826. Upon entry of the piston end 822a into a hole 826a of the rail 826, after forcing the piston end downwardly, a portion of the snap-ring 822b moves into a corresponding recess 822c of the piston end 822a, releasably connecting the piston end 822a to the rail 826. With an appropriate upward force, the piston 822 can be released from the snap-ring 822b and the piston removed from the rail 826. Three o-rings encircle the pistons 822, o-rings 822x, 822y and 822z. Prior to piston movement fluid under pressure introduced through a port 822r moves the piston 822 (and, therefore, its corresponding rail) downwardly. With the piston 822 in a down piston fluid introduced through a port 822s moves the piston (and, therefore the corresponding rail) upwardly.

Figure 1B shows the screen assembly 830 which has screening material 831 and edges 832 each with a plurality of spaced-apart holes 833 whose location corresponds to pins as described below. Optionally a metal perforated plate or sheet is used beneath the screening material as part of the screening material, e.g. made of 14 gauge steel (approximately 2mm), with holes corresponding to the holes 833 that extend through the screening material. Optionally, instead of an entire perforated sheet or plate strips of metal are located beneath and/or above and along the edges 832 and the holes extend through these strips. As shown the screen assembly, in one aspect, is substantially flat (uncrowned) prior to installation on a separator like a shale shaker or the separator 810, Figure 1A. The screen material 831 may be any known screening material useful on screen assemblies for vibratory separators or shale shakers, e.g. but not limited to, as any disclosed in any patent or application referred to herein and, in one particular aspect is three layers of stainless steel wire mesh including a first top layer of fine mesh, a second middle layer of fine mesh, and a third bottom layer of coarse mesh, with the holes 833 extending through all three mesh layers. Optionally, as desired, a support structure may be used under the third bottom mesh layer (e.g., but not limited to, strip support, frame, or plate). Such a support structure may be of the type disclosed in WO 2004/035234 or WO 2004/035236.

As shown in Figure 1C with the screen assembly 820 on the vibratory separator 810 and the rails 826 pushed down against it, the screen assembly 830 assumes a curved shape corresponding to the curve of the crossmembers 815 and 819a; the rails seal against screenng material 831; and the screening material 831 is tensioned.

Figures 2A to 2C illustrate a screen assembly clamping apparatus 840 for use in a vibratory separator or shale shaker of the present invention, and, in one aspect, in a vibratory separator 810, Figure 1A. Like numerals in Figures 2A to 2C and in Figures 1A to 1I indicate the same parts. Basket walls 816a of a basket 816 have bars 811 secured thereto with bolts 811a and pistons 822 project down from the bars 811 into rails 826. Three pistons are used on each side, but in Figure 2A only one piston on each side is shown. It is within the scope of this invention to use one, two, three, four or more such pistons on each of two sides of a screen assembly. Optionally, side ledges 852 fixed to the basket walls 16a have upwardly projecting pins 854 that extend through corresponding holes 833 in edge portions 832 of the screen assembly 830 and into corresponding holes 842 of the rails 826 positioned above the screen assembly 830. The holes 842 are sufficiently long to allow the rails (or bladder apparatus as described below) to hold the screen assembly down against the side ledges 852 and, in one aspect, the screening material 831 in the screen assembly 830 is tensioned or further tensioned by either being stretched over the crowned support 818 fixed to the basket of the shale shaker simply by downward movement of the rail 826 against the top of the screen assembly 830 and/or by the pins 854 being arranged at canted angle and the holes 833 in the screen assembly being placed such that upon the rail 826 sliding down the pins, the perimeter of the holes 833 in the screening material act against the sloped pin 854 applying lateral tension to the screening material 831, and most preferably by the ledge 852 having an inwardly downwardly sloped upper surface and the rail 826 having a corresponding inwardly downwardly sloped surface, such that downward movement of the inner lower portion of the rail 826 pushes down on the sides of the screen assembly 830 over the ledge 852, tensions the screening material against the edge of the screening material held in by the angled pin 854. Alternatively, the angled pin 854 and the inwardly and downwardly sloped surface of the ledge 852 do not facilitate tensioning of the screening material, but simply improve fixing of the screen to the basket of the shaker and inhibit movement of the screen assembly during operation of the shale shaker, which improves sealing of the screen assembly against an adjacent screen or side or end seal of the shale shaker. The screen assembly may be preformed with sides which are upturned to improve location of the holes 833 over the pins 842 on the sloped surface of the ledges 852. Preferably, the sides of the screen assembly 830 are co-linear with the surface of the screen and bend over the ledge 852 when the rail 826 is moved downwardly thereon. Preferably, the bending deforms the screen assembly, such that a plastically deformed permanent fold forms. This has the advantage that the folded sides are folded in the shale shaker and thus are bent is exactly the right place to improve sealing and resistance to movement during operation. The pins 854 are preferably arranged at an angle of between 5° and 60° from vertical, more preferably between 10° and 45° and most preferably an angle of 15° from vertical. The angle of the inwardly sloped ledge 852 is preferably arranged at an angle of between 5° and 60° from horizontal, more preferably between 10° and 45° and most preferably an angle of 15° from horizontal.

It is within the scope of the present invention to provide such ledges 852 and pins 854 for any shale shaker or vibratory separator. In one aspect, material to be treated by the shale shaker, for example drilling fluid containing drilled cuttings, debris, etc., is introduced onto the top of the screen assembly 830. Drilling fluids pass through screening material 831 and solid material and particles are moved off the top of the screen assembly 830 by vibratory action. It is within the scope of this invention for any system herein to use one, two, three, four, five or more pins.

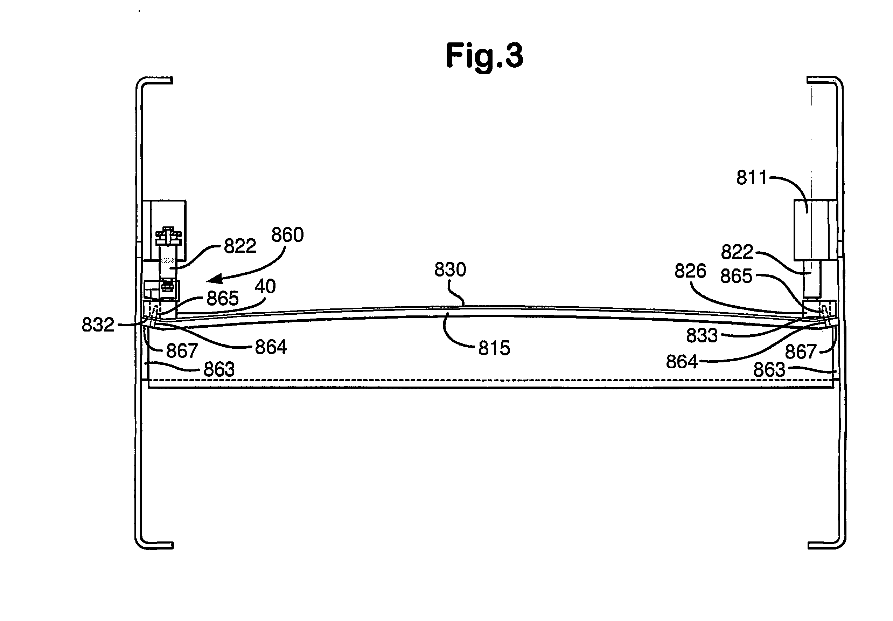

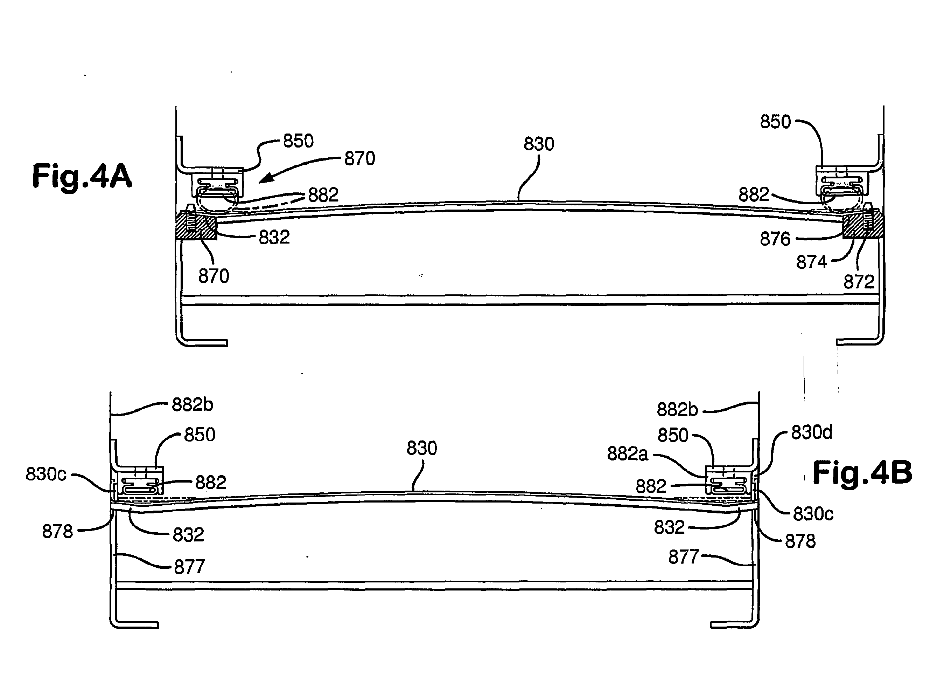

Each ledge 852 has a non-horizontal inwardly inclined angled upper surface 856 and each rail 826 has a correspondingly angled lowered surface 857. When an initially flat screen assembly 830 (see Figure 1B) is positioned in place on the ledges 852, its outer edge portions 832 contact the upper surfaces 856 of the ledges 852. When the rails 826 are forced down onto the screen assembly 830, they bend the edges 833 into contacting conformity with the upper surfaces 856, with the tops of pins 854 moving into corresponding holes 842, thereby crowning the screen assembly 830 and tensioning the screening material therein. The rails 826 forced down on the spaced-apart sides of the screen assembly effect a seal between the screen assembly and the ledges 852 and between the screen assembly and the rails 826. It is within the scope of this invention for the pins 854 (and any pins disclosed herein) to be vertical or parallel with sides of a basket or screen support in which and/or on which a screen assembly is mounted or installed. As shown in Figure 2A, in Figure 3 and Figure 4A, it is within the scope of this invention to cant a pin or pins inwardly from the side or wall of a basket, etc. so that, as a screen assembly is forced down around the pin(s) (e.g. by movable rails or by inflating bladder apparatus), the screen assembly's screening material is tensioned. Such downward movement of rails or bladders also effects seals along the sides of the screen assembly. Thus the material from which the sides of the screen assembly is made, is preferably ductile, sufficient to allow the sides to bend by the preferred angles. The sides of the screen assembly 830 may comprise solely layers of screening material 831 and may further comprise a portion of a perforate supporting plate or a portion of a screen support.

Figure 3 shows another embodiment of a clamping apparatus 860 in accordance with the present invention, which is similar to the apparatus 840 (Figure 2A) and like numerals indicate like parts; but the system 860 does not have the ledges 852 with the angled upper surfaces 856. Side supports 863 support the screen assembly 830 and the downward force of the rails 826 bends the edge portions 832 of the screen assembly 830 against an upper surface 867 of the side supports 863. Optionally pins 864, like the pins 854, Figure 2A connected to crossmembers 815 extend into corresponding holes 865 in the rails 826. These pins 864 also extend through the holes 833 of the screen assembly 830.

Figures 4A to 4C show a screen assembly clamping system 870 in accordance with the present invention for a vibratory separator or shale shaker. Side ledges 872 (like the ledges 852, Figure 2A) have upwardly projecting pins 874 that extend through corresponding holes in edge portions of a screen assembly 830. Each ledge 872 has a non-horizontal angled upper surface 876. Bladders 882 of bladder apparatuses 880 [bladders shown both deflated (flattened, 882a) and inflated (oval, 882b) in Figures 4A and 55b] press down on screening material of the screen assembly 830 and bend the edge portions into conformity with the angle of the upper surfaces 876 of the ledges 872, thus "crowning" the screen assembly 830 (as do the piston mechanisms and rails 40 in the system of Figures 1C and 2A) and tensioning the screening material.

As shown in Figure 4B air from a pressurized air source PS provides air under pressure for inflating the bladders 882.

As shown in Figure 4C, the screen assembly 830 may, optionally, have side lips or hooks 830c which are selectively releasably positionable in gaps 830d between brackets 882a holding the bladders 882 and side walls 882b of a vibratory separator. Any known shape or configuration for any known hookstrip and/or hooks may be used with associated well-known hook or hookstrip holding apparatus.

Figure 4C shows a system 870a like the system 870, Figure 4A, and like numerals indicate like parts; but the system 870a does not have the ledges 872. Side supports 877 support the screen assembly 830 and the downward force of the bladders 882 bends the edge portions 832 of the screen assembly 830 against an upper surface 878 of the side supports 877.

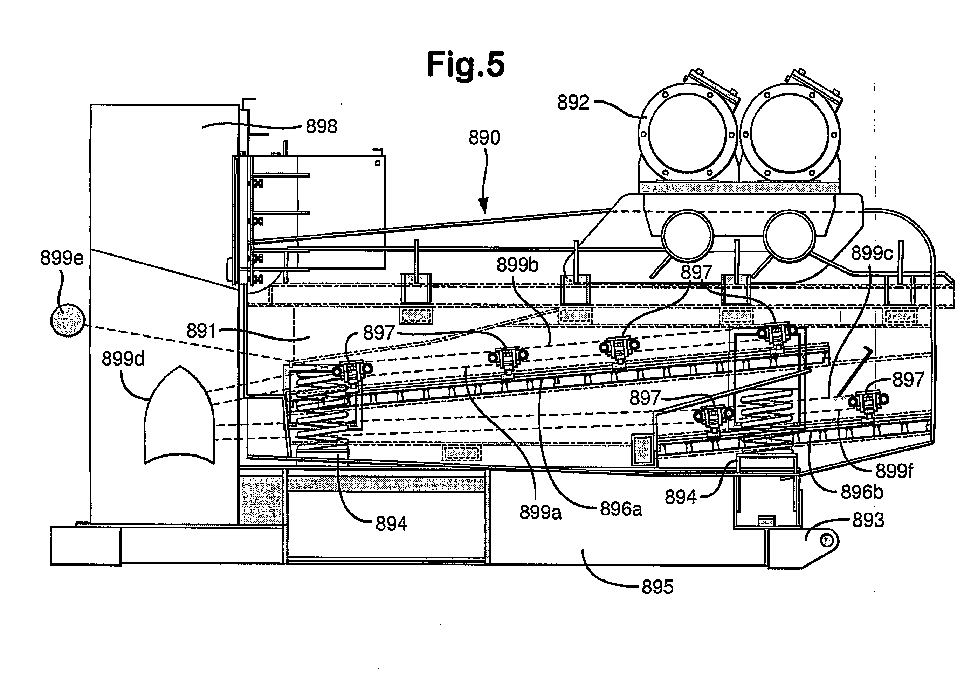

Figure 5 shows a shale shaker 890 in accordance with the present invention which has a screen mounting basket 891; vibration apparatus 892 connected to the basket 891; a mounting skid 893 spring mounts 894 (two on each side) connecting the basket 891 to the skid 893; and a lower receptacle 895 which receives fluid passing through screen assemblies 896a and 896b.

Piston mechanisms 897 (like the piston mechanisms described above) releasably hold the screen assemblies 896a and 896b in place.

Fluid is introduced onto the screen assembly 896a from a tank or "possum belly" 898. Separated solids progress up the screen 896a and are discharged onto the screen assembly 896b. Following further fluid separation, the solids move up and off of the screen assembly 896b and are discharged from the shale shaker 890. Hydraulic fluid to power the piston mechanisms is provided in lines 899a, 899b, 899c, and 899f from a pressurized source 899d.

Figure 6 shows a manually operable apparatus 895 for moving rails 826. Members 896 with handles 897 and cam surfaces 898 are movable on shafts 899 to move a rail 826 downwardly. The rails 826 in this apsect are movably mounted to corresponding basket side walls or other structure.

## Claims

1. An apparatus for screening solids from a solids laden drilling mud, the apparatus comprising a vibratory separator (810) and a screen assembly (830) having at least one layer of screening material (831), the vibratory separator (810) having a basket (816), mounting apparatus (811,826) for fixing said screen assembly (830) in said vibratory separator (810) said mounting apparatus (811,826,852) comprising an anvil (852) and a hammer (826) **characterized in that** at least one of said anvil (852) and hammer (826) comprises at least one pin (854), said screen assembly (830) having at least one hole (833) therein for receiving said at least one pin (854) and said screen assembly (830) arranged between said anvil (852) and said hammer (826) for bending a portion (832) of said screen assembly (830), said portion comprising said at least one layer of screening material (831).

2. An apparatus as claimed in Claim 1, wherein said bending forms a fold in said portion (832) of said screen assembly (830).

3. An apparatus as claimed in Claim 1 or 2, wherein said portion (832) is located at an edge of said screen assembly (830).

4. An apparatus as claimed in Claim 3, wherein said screen assembly (830) is generally rectangular and said portion (832) of the screen assembly (830) is a side of said rectangle.

5. An apparatus as claimed in any of Claims 1 to 4, wherein said portion (832) of said screen assembly (830) comprises a portion of a perforate plate.

6. An apparatus as claimed in any of Claims 1 to 5, wherein said portion (832) of said screen assembly (830) comprises a portion of a support.

7. An apparatus as claimed in any of Claims 1 to 6, wherein said anvil comprises a sloped surface (856) on a ledge (852) attached to said basket (816).

8. A apparatus as claimed in Claim 7, wherein said at least one pin (854) is arranged on said ledge (852).

9. An apparatus as claimed in any of Claims 1 to 8, wherein said hammer (826) comprises a rail extending substantially the entire length of the screen assembly (830).

10. An apparatus as claimed in any of Claims 1 to 9, wherein said hammer comprises at least one actuator (822,882).

11. An apparatus as claimed in Claim 10, wherein said at least one actuator (822,882) is activated by one of: pneumatic fluid; hydraulic fluid; an electric motor.

12. An apparatus as claimed in Claim 10 or 11, wherein said actuator (822) is a dual acting piston.

13. An apparatus as claimed in Claim 10 or 11, wherein said actuator (882) is an inflatable bladder (882).

14. An apparatus as claimed in Claim 10 or 11, wherein said at least one actuator is mounted on a bar mounted to said basket.

15. An apparatus as claimed in any preceding claim, wherein, the other of said anvil (852) and hammer (826) comprises at least one hole (842) or recess for receiving said at least one pin (854).

16. An apparatus as claimed in any preceding claim, wherein said at least one pin (854) is a plurality of pins.

17. An apparatus as claimed in any preceding claim, wherein said at least one hole (842) or recess is a plurality of holes or recesses.

18. A method for fitting the screen assembly in the vibratory separator of the apparatus as claimed in any preceding claim, the method comprising the steps of placing said screen assembly (830) and a portion of at least one layer of screening material (832) of said screen assembly (830) in said mounting apparatus (811,826) between said anvil (852) and said hammer (826), at least one pin (854) passing through said at least one hole (842) or recess in said screen assembly, said hammer (826) moving toward said anvil (852) bending said portion (832) of said screen assembly (830) and said at least one layer of screening material (831).

19. A method for separating solids from a solids laden drilling mud using the apparatus as claimed in any one of Claims 1 to 17, wherein the vibratory separator is operated to vibrate the screen assembly in the basket on to which solids laden drilling fluid flows, the fluid component and small solid particles flowing through the screen assembly and large solids passing over said screen assembly.

## Patentansprüche

1. Vorrichtung zum Sieben von Feststoffen aus einem mit Feststoffen angereicherten Bohrschlamm, wobei die Vorrichtung einen Vibrationssichter (810) und eine Siebanordnung (830) mit wenigstens einer Lage aus Siebmaterial (831) umfasst, wobei der Vibrationssichter (810) einen Korb (816) und eine Montageeinrichtung (811, 826) zum Befestigen der Siebanordnung (830) in dem Vibrationssichter (810) besitzt, wobei die Montageeinrichtung (811, 826, 852) einen Amboss (852) und einen Hammer (826) umfasst, **dadurch gekennzeichnet, dass** der Amboss (852) und/oder der Hammer (826) wenigstens einen Stift (854) aufweisen, die Siebanordnung (830) in sich wenigstens ein Loch (833) aufweist, um den wenigstens einen Stift (854) aufzunehmen, und die Siebanordnung (830) zwischen dem Amboss (852) und dem Hammer (826) angeordnet ist, um einen Abschnitt (832) der Siebanordnung (830) zu biegen, wobei der Abschnitt die wenigstens eine Schicht aus Siebmaterial (831) umfasst.

2. Vorrichtung nach Anspruch 1, wobei das Biegen in dem Abschnitt (832) der Siebanordnung (830) einen Knick bildet.

3. Vorrichtung nach Anspruch 1 oder 2, wobei sich der Abschnitt (832) an einer Kante der Siebanordnung (830) befindet.

4. Vorrichtung nach Anspruch 3, wobei die Siebanordnung (830) im Allgemeinen rechteckig ist und der Abschnitt (832) der Siebanordnung (830) eine Seite des Rechtecks ist.

5. Vorrichtung nach einem der Ansprüche 1 bis 4, wobei der Abschnitt (832) der Siebanordnung (830) einen Abschnitt einer perforierten Platte umfasst.

6. Vorrichtung nach einem der Ansprüche 1 bis 5, wobei der Abschnitt (832) der Siebanordnung (830) einen Abschnitt eines Trägers umfasst.

7. Vorrichtung nach einem der Ansprüche 1 bis 6, wobei der Amboss eine geneigte Oberfläche (856) auf einer an dem Korb (816) befestigten Leiste (852) aufweist.

8. Vorrichtung nach Anspruch 7, wobei der wenigstens eine Stift (854) an der Leiste (852) angeordnet ist.

9. Vorrichtung nach einem der Ansprüche 1 bis 8, wobei der Hammer (826) eine Schiene umfasst, die sich im Wesentlichen über die gesamte Länge der Siebanordnung (830) erstreckt.

10. Vorrichtung nach einem der Ansprüche 1 bis 9, wobei der Hammer wenigstens ein Stellglied (822, 882) umfasst.

11. Vorrichtung nach Anspruch 10, wobei das wenigstens eine Stellglied (822, 882) durch eines der folgenden Elemente aktiviert wird: pneumatisches Fluid; hydraulisches Fluid; Elektromotor.

12. Vorrichtung nach Anspruch 10 oder 11, wobei das Stellglied (822) ein doppelt wirkender Kolben ist.

13. Vorrichtung nach Anspruch 10 oder 11, wobei das Stellglied (882) ein aufblasbarer Balg (882) ist.

14. Vorrichtung nach Anspruch 10 oder 11, wobei das wenigstens eine Stellglied an einer an dem Korb montierten Stange montiert ist.

15. Vorrichtung nach einem vorhergehenden Anspruch, wobei der jeweils andere des Ambosses (852) und des Hammers (826) wenigstens ein Loch (842) oder eine Aussparung für die Aufnahme des wenigstens einen Stifts (854) aufweist.

16. Vorrichtung nach einem vorhergehenden Anspruch, wobei der wenigstens eine Stift (854) mehrere Stifte umfasst.

17. Vorrichtung nach einem vorhergehenden Anspruch, wobei das wenigstens eine Loch (842) oder die wenigstens eine Aussparung mehrere Löcher bzw. Aussparungen umfasst.

18. Verfahren zum Einsetzen der Siebanordnung in den Vibrationssichter der Vorrichtung nach einem vorhergehenden Anspruch, wobei das Verfahren die folgenden Schritte umfasst: Anordnen der Siebanordnung (830) und eines Abschnitts wenigstens einer Schicht aus Siebmaterial (832) der Siebanordnung (830) in der Montageeinrichtung (811, 826) zwischen dem Amboss (852) und dem Hammer (826), wobei wenigstens ein Stift (854) durch das wenigstens eine Loch (842) oder die Aussparung in der Siebanordnung verläuft, wobei sich der Hammer (826) zu dem Amboss (852) bewegt und den Abschnitt (832) der Siebanordnung (830) und die wenigstens eine Schicht aus Siebmaterial (831) biegt.

19. Verfahren zum Trennen von Feststoffen von einem mit Feststoffen angereicherten Bohrschlamm unter Verwendung der Vorrichtung nach einem der Ansprüche 1 bis 17, wobei der Vibrationssichter betrieben wird, um die Siebanordnung in dem Korb, auf der das mit Feststoffen angereicherte Bohrfluid fließt, vibrieren zu lassen, wobei die Fluidkomponente und kleine feste Partikel durch die Siebanordnung fließen und große Feststoffe sich über die Siebanordnung bewegen.

## Revendications

1. Appareil permettant de séparer des solides d'un fluide de forage chargé en solides, l'appareil comportant un séparateur vibratoire (810) et un ensemble crible (830) ayant au moins une couche de matériau de criblage (831), le séparateur vibratoire (810) comportant un panier (816), un dispositif de montage (811,826) permettant de fixer ledit ensemble crible (830) dans ledit séparateur vibratoire (810), ledit dispositif de montage (811, 826, 852) comprenant une enclume (852) et un marteau (826), **caractérisé en ce que** au moins l'un de ladite enclume (852) et dudit marteau (826) comporte au moins une broche (854), ledit ensemble crible (830) présentant en lui au moins un trou (833) permettant de recevoir ladite au moins une broche (854) et ledit ensemble crible (830) étant disposé entre ladite enclume (852) et ledit marteau (826) en vue de courber une partie (832) dudit ensemble crible (830), ladite partie comportant ladite au moins une couche de matériau de criblage (831).

2. Appareil selon la revendication 1, dans lequel ladite courbure forme un pli dans ladite partie (832) dudit ensemble crible (830).

3. Appareil selon la revendication 1 ou 2, dans lequel ladite partie (832) est située au niveau d'un bord dudit ensemble crible (830).

4. Appareil selon la revendication 3, dans lequel ledit ensemble crible (830) est généralement rectangulaire et ladite partie (832) de l'ensemble crible (830) est un côté dudit rectangle.

5. Appareil selon l'une quelconque des revendications 1 à 4, dans lequel ladite partie (832) dudit ensemble crible (830) comprend une partie d'une plaque perforée.

6. Appareil selon l'une quelconque des revendications 1 à 5, dans lequel ladite partie (832) dudit ensemble crible (830) comprend une partie d'un support.

7. Appareil selon l'une quelconque des revendication 1 à 6, dans lequel ladite enclume présente une surface inclinée (856) sur une pièce en saillie (852) fixée au dit panier (816).

8. Appareil selon la revendication 7, dans lequel ladite au moins une broche (854) est disposée sur ladite pièce en saillie (852).

9. Appareil selon l'une quelconque des revendications 1 à 8, dans lequel ledit marteau (826) comprend un rail s'étendant essentiellement sur toute la longueur de l'ensemble crible (830).

10. Appareil selon l'une quelconque des revendications 1 à 9, dans lequel ledit marteau comporte au moins un actionneur (822, 882).

11. Appareil selon la revendication 10, dans lequel ledit au moins un actionneur (822, 882) est actionné par l'un des : fluide pneumatique ; fluide hydraulique ; moteur électrique.

12. Appareil selon la revendication 10 ou 11, dans lequel ledit actionneur (822) est un piston à double action.

13. Appareil selon la revendication 10 ou 11, dans lequel ledit actionneur (882) est une vessie gonflable (882).

14. Appareil selon la revendication 10 ou 11, dans lequel ledit au moins un actionneur est fixé sur une barre montée sur ledit panier.

15. Appareil selon l'une quelconque des revendications précédentes, dans lequel l'autre de ladite enclume (852) et dudit marteau (826) comporte au moins un trou (842) ou un évidement destiné à recevoir ladite au moins une broche (854).

16. Appareil selon l'une quelconque des revendications précédentes, dans lequel ladite au moins une broche (854) représente une pluralité de broches.

17. Appareil selon l'une quelconque des revendications précédentes, dans lequel ledit au moins un trou (842) ou évidement représente une pluralité de trous ou d'évidements.

18. Procédé permettant d'ajuster l'ensemble crible dans le séparateur vibratoire de l'appareil selon l'une quelconque des revendications précédentes, le procédé comprenant les étapes consistant à placer ledit ensemble crible (830) et une partie d'au moins une couche de matériau de criblage (832) dudit ensemble crible (830) dans ledit appareil de montage (811, 826) entre ladite enclume (852) et ledit marteau (826), une broche (854) au moins passant à travers ledit au moins un trou (842) ou évidement dans ledit ensemble crible, ledit marteau (826) se déplaçant vers ladite enclume (852) courbant ladite partie (832.) dudit ensemble crible (830) et ladite au moins une couche de matériau de criblage (831).

19. Procédé permettant de séparer des solides d'un fluide de forage chargé en solides utilisant l'appareil selon l'une quelconque des revendications 1 à 17, dans lequel le séparateur vibratoire est actionné afin de faire vibrer l'ensemble crible dans le panier sur lequel s'écoule le fluide de forage chargé en matières solides, le composant fluide et les petites particules de matières solides s'écoulant à travers l'ensemble crible et les matières solides de grande dimension passant sur ledit ensemble crible.
